# EUROPEAN PATENT SPECIFICATION

(11) **EP 4 529 546 B1**
(45) Date of publication and mention of the grant of the patent: **29.04.2026**
(21) Application number: 23734850.3
(22) Date of filing: 22.05.2023
(51) Int. Cl.: C08G 77/10

(54) **METHOD FOR PREPARING POLYORGANOSILOXANE COPOLYMERS**
VERFAHREN ZUR HERSTELLUNG VON POLYORGANOSILOXANCOPOLYMEREN
PROCÉDÉ DE PRÉPARATION DE COPOLYMÈRES DE POLYORGANOSILOXANE

(30) Priority: 15.06.2022 US 202263352260 P
(43) Date of publication of application: 02.04.2025
(73) Proprietor: DOW GLOBAL TECHNOLOGIES LLC, Midland, MI 48641-1967 (US); Dow Silicones Corporation, Midland, Michigan 48641-1967 (US)
(72) Inventor: DEPIERRO, Michael, Midland, Michigan 48640 (US); ROBERTS, John, Midland, Michigan 48667 (US); ROSCIOLI, Jerome, Midland, Michigan 48674 (US); CHEN, Xiaoyun, Midland, Michigan 48667 (US)
(74) Representative: Elkington and Fife LLP
(86) International application number: PCT/US2023/067288
(87) International publication number: WO 2023/244898

(56) References cited:
- US-A1- 2021 388 208
- ESTEVES A C C ET AL: "Influence of cross-linker concentration on the cross-linking of PDMS and the network structures formed", POLYMER, ELSEVIER, AMSTERDAM, NL, vol. 50, no. 16, 31 July 2009 (2009-07-31), pages 3955 - 3966, XP026351542, ISSN: 0032-3861, [retrieved on 20090616]

## Description

### TECHNICAL FIELD

A method for preparing a polyorganosiloxane copolymer is disclosed. More particularly, the method produces a copolymer with a desired sequence distribution of units of formula R'RSiO_{2/2} (D^{Vi} units), where each R is a monovalent hydrocarbyl group or halogenated hydrocarbyl group and each R' is an alkenyl group.

### INTRODUCTION

U.S. Patent 3,183,209 discloses vinyl-containing organopolysiloxanes and a procedure for their production. The vinyl-containing organopolysiloxanes can be prepared by heating decamethyltetrasiloxane and cyclic siloxanes methylvinylcyclosiloxane, octamethylcyclotetrasiloxane, and octaphenylcyclotetrasiloxane in the presence of potassium dimethylsilanolate.

NMR has been used to characterize methylvinylsiloxane copolymers but suffers from the drawbacks that real time analysis of the reaction mixture for producing methylvinylsiloxane copolymers on a commercial scale is difficult, expensive, and impractical using NMR techniques. Therefore, previous processes may suffer from the drawback of poor productivity because it may be desirable to stop the reaction at, or very shortly after, reaching the desired product structure to minimize processing time. However, time to reach the desired product structure can vary from batch to batch for various reasons, including the particular siloxanes selected as reactants and variability in process conditions such as the temperature selected. As a result, the time needed to achieve the desired product will vary from batch to batch.

Also Raman spectroscopy has been used in US 2021/388208 A1 to follow the curing of silicones.

### SUMMARY

A method for preparing a polyorganosiloxane copolymer is provided herein. The method comprises:
1) combining starting materials comprising
   A) a source of siloxane units of formula (R₂SiO_{2/2}),
   B) a source of siloxane units of formula (RR'SiO_{2/2}),
      where each R is independently selected from the group consisting of an alkyl group and a halogenated alkyl group and R' represents an alkenyl group, and
   C) a base catalyst,
   thereby forming a mixture;
2) agitating the mixture at a temperature sufficient to form a reaction mixture comprising the copolymer via equilibration reaction;
3) using Raman spectroscopy to monitor a spectral region including a characteristic Raman band that corresponds to one or both of a concentration of decoupled (RR'SiO_{2/2}) and a concentration of coupled (RR'SiO_{2/2}) units in the reaction mixture, where R and R' are as described above;
4) stopping the equilibration reaction when a target related to the characteristic Raman band is reached.

### BRIEF DESCRIPTION OF THE FIGURES

Figure 1 shows the integrated peak area as a function of time for the decoupled - OSiMeVi- moiety for three different samples with varying -OSiMeVi- content in terms of weight percent generated according to Reference Example C. Note that while peak area is used in all examples, other ways to quantify peak intensity such as peak height can also be used.
Figure 2 illustrates the spectral changes that can be observed based on in situ Raman reaction spectra, and how the peak area of the coupled and decoupled -OSiViMe- species can be utilized to track the reaction progress.
Figure 3 shows the comparison of the in situ Raman results to off-line NMR analysis. Remarkable consistency was observed.

### DETAILED DESCRIPTION

Step 1) of the method described herein comprises combining starting materials comprising: A) a source of siloxane units of formula (R₂SiO_{2/2}), B) a source of siloxane units of formula (RR'SiO_{2/2}), where each R is independently selected from the group consisting of an alkyl group and a halogenated alkyl, and C) a base catalyst, thereby forming a mixture.

Starting materials A) and B) may be one or more polyorganosiloxane(s), which comprise unit formula:

(R₃SiO_{1/2})ₜ(R₂R'SiO_{1/2})ᵤ(R₂SiO_{2/2})ᵥ(RR'SiO_{2/2})_{w}(RSiO_{3/2})ₓ(R'SiO_{3/2})_{y}(SiO_{4/2})_{z},

where subscripts t, u, v, w, x, y, and z represent amounts of each unit and have average values such that, t ≥ 0, u ≥ 0, v ≥ 1, w ≥ 1, x ≥ 0, y ≥ 0, z ≥ 0, with the provisos that a quantity (v + w) ≥ 3, a quantity (x + y + z) is 0 to a value sufficient to provide up to 20 mol % of siloxane units in the molecule; a quantity (t + u + v + w) ≥ 3. Alternatively, (t + u + v + w) may have a value greater than or equal to 3, alternatively 3 to 2,000; alternatively 3 to 1,000; alternatively 3 to 500; alternatively 3 to 300; and alternatively 3 to 200. In this unit formula, each R is independently selected from the group consisting of an alkyl and a halogenated alkyl group. Alternatively, when the polyorganosiloxane is linear or cyclic, the quantity (x + y + z) = 0.

Suitable alkyl groups for R are exemplified methyl, ethyl, propyl (including n-propyl and/or isopropyl), butyl (including n-butyl, t-butyl, sec-butyl, and/or isobutyl), pentyl (including cyclopentyl, n-pentyl, and branched isomeric species with 5 carbon atoms), hexyl (including cyclohexyl, n-hexyl, and branched isomeric species with 6 carbon atoms), heptyl (including cycloheptyl, n-heptyl, and branched isomeric species with 7 carbon atoms), octyl (including cyclooctyl, n-octyl, and branched isomeric species with 8 carbon atoms), nonyl (including cyclononyl, n-nonyl, and branched isomeric species with 9 carbon atoms), and decyl (including cyclodecyl, n-decyl, and branched isomeric species with 10 carbon atoms). Suitable halogenated alkyl groups for R are alkyl groups (such as those described above) where one or more hydrogen atoms bonded to a carbon atom has been formally replaced with a halogen atom. Halogenated alkyl groups include fluorinated alkyl groups such as trifluoromethyl (CF₃), fluoromethyl, trifluoroethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl; and chlorinated alkyl groups such as chloromethyl, 3-chloropropyl, 2,2-dichlorocyclopropyl, and 2,3-dichlorocyclopentyl. Alternatively, each R may be selected from methyl, ethyl, propyl or butyl; alternatively methyl or ethyl; and alternatively each R may be methyl.

Each R' in the formula above is an independently selected alkenyl group. Suitable alkenyl groups for R' may be selected from the group consisting of vinyl, allyl, and hexenyl; alternatively vinyl and hexenyl; and alternatively vinyl.

Starting materials A) and B) may be the same molecule, when a polyorganosiloxane has both a (R₂SiO_{2/2}) unit and a (RR'SiO_{2/2}) unit. Alternatively, starting materials A) and B) may be different molecules.

For example, starting material A) may be selected from the group consisting of: A1) a cyclic polydiorganosiloxane of unit formula (R₂SiO_{2/2})_{c}, where 3 ≤ c is ≤ 12; A2) a linear polyorganosiloxane comprising unit formula (R₃SiO_{1/2})ₐ(R₂R'SiO_{1/2})_{d}(R₂SiO_{2/2})_{b}, where a quantity (a + d) = 2, and 3 ≤ b ≤ 200; and A3) a combination of both A1) and A2). In the unit formulas for A1) and A2), R and R' are as described above. Alternatively, in starting material A1), subscript c may be greater than or equal to 3, alternatively 3 ≤ c ≤ 9, alternatively 3 ≤ c ≤ 6, and alternatively 4 ≤ c ≤ 6. Alternatively, in starting material A2), subscript d may be 0. Cyclic polydiorganosiloxanes suitable for use as starting material A1) are known in the art and are commercially available. For example, dimethylcyclosiloxanes, exemplified by octaorganocyclotetrasiloxanes such as 2,2,4,4,6,6,8,8,-octamethylcyclotetrasiloxane; decaorganocyclopentasiloxanes such as 2,2,4,4,6,6,8,8,-decamethylcyclopentasiloxane; and dodecaorganocyclohexasiloxanes such as 2,2,4,4,6,6,8,8,10,10-dodecamethylcyclohexasiloxane are known in the art and are commercially available from various sources such as Dow Silicones Corporation of Midland, Michigan, USA; Gelest, Inc. of Morrisville, Pennsylvania, USA; and Sigma-Aldrich, Inc. of St. Louis, Missouri, USA. Suitable linear polyorganosiloxanes suitable for use as starting material A2) include trimethylsiloxy-terminated polydimethylsiloxanes, which are also known in the art and are commercially available from the same sources listed above. For example, trimethylsiloxy-terminated polydimethylsiloxanes with viscosities of 5, 10, 50, 500, and 1,000 cSt are commercially available from Dow Silicones Corporation of Midland, Michigan, USA. Viscosity may be measured at 25 °C and 0.1 to 50 RPM on a Brookfield DV-III cone & plate viscometer with #CP-52 spindle. One skilled in the art would recognize that rotation rate decreases as viscosity increases and would be able to select the appropriate rotation rate when using this test method to measure viscosity. Alternatively, suitable dimethylvinylsiloxy-terminated polydimethylsiloxanes may be used as starting material A2), and these are also known in the art and commercially available from various vendors including Gelest, Inc., under the tradenames: DMS-V00, DMS-V05, DMS-V21, and DMS-V31. Alternatively, starting material A) may be free of silicon bonded alkenyl groups.

Starting material B) is alkenyl-functional and may be selected from the group consisting of: B1) a cyclic polyorganosiloxane of unit formula (RR'SiO_{2/2})_{c}, where 3 ≤ c ≤ 12; B2) a linear polyorganosiloxane of unit formula (R₃SiO_{1/2})ₐ(R₂R'SiO_{1/2})_{d}(RR'SiO_{2/2})ₑ, where a quantity (a + d) = 2, and 3 ≤ e ≤ 200; and B3) a combination of both B1) and B2). In the unit formulas for B1) and B2), R and R' are as described above. Alternatively, in the unit formula for B1), subscript c may greater than or equal to 3, alternatively 3 ≤ c ≤ 9, alternatively 3 ≤ c ≤ 6, and alternatively 4 ≤ c ≤ 6. Alternatively, in the unit formula for B2), subscript d may be 0.

Suitable cyclic polyorganosiloxanes for starting material B1) are known in the art and are commercially available. Examples of cyclic alkenyl-functional polydiorganosiloxanes include 2,4,6-trimethyl-2,4,6-trivinyl-cyclotrisiloxane; 2,4,6,8-tetramethyl-2,4,6,8-tetravinyl-cyclotetrasiloxane; 2,4,6,8,10-pentamethyl-2,4,6,8,10-pentavinyl-cyclopentasiloxane; and 2,4,6,8,10,12-hexamethyl-2,4,6,8,10,12-hexavinyl-cyclohexasiloxane. These cyclic alkenyl-functional polydiorganosiloxanes are known in the art and are commercially available from, *e.g.,* Sigma-Aldrich of St. Louis, Missouri, USA; Milliken of Spartanburg, South Carolina, USA; and other vendors.

Starting material (B2) may comprise an alkenyl-functional polydiorganosiloxane such as i) bis-dimethylvinylsiloxy-terminated poly(dimethylsiloxane/methylvinylsiloxane), ii) bis-dimethylvinylsiloxy-terminated polymethylvinylsiloxane, iii) bis-trimethylsiloxy-terminated poly(dimethylsiloxane/methylvinylsiloxane), iv) bis-trimethylsiloxy-terminated polymethylvinylsiloxane, v) bis-dimethylhexenylsiloxy-terminated poly(dimethylsiloxane/methylhexenylsiloxane), vi) bis-dimethylhexenylsiloxy-terminated polymethylhexenylsiloxane, vii) bis-trimethylsiloxy-terminated poly(dimethylsiloxane/methylhexenylsiloxane), viii) bis-trimethylsiloxy-terminated polymethylhexenylsiloxane, ix) bis-dimethylvinylsiloxy-terminated poly(dimethylsiloxane/methylhexenylsiloxane), and x) a combination of two or more thereof.

Methods of preparing linear alkenyl-functional polydiorganosiloxanes described above for starting material (B2), such as hydrolysis and condensation of the corresponding organohalosilanes and oligomers or equilibration of cyclic polydiorganosiloxanes with hydroxyl functional polydiorganosiloxanes, are known in the art, see for example U.S. Patents 4,772,515 and 5,317,072, which disclose preparing linear polydiorganosiloxanes with alkenyl groups. Examples of linear polydiorganosiloxanes having alkenyl groups are commercially available from, *e.g.,* Gelest Inc. of Morrisville, Pennsylvania, USA under the tradenames VDT-123, VDT-127, VDT-131, VDT-431, VDT-731, and VDV-0131.

Starting material C) is a base catalyst suitable for catalyzing equilibration reaction in the method described herein. The catalyst may be homogeneous or heterogeneous. Suitable catalysts include alkali metal hydroxides such as potassium hydroxide and sodium hydroxide; tetrabutylphosphonium hydroxide; tetramethylammonium hydroxide, phosphazene bases, and silanolates such as potassium trimethylsilanolate and tetramethylammonium silanolate. Catalysts suitable for use as starting material C) are known in the art, for example, the base catalyst disclosed in U.S. Patent 3,183,209; U.S. Patent 4,772,515; or U.S. Patent 6,448,196 and are commercially available from various vendors such as Millipore Sigma of St. Louis, Missouri, USA.

The amount of starting material C), the catalyst, is sufficient to catalyze the equilibrium reaction. The exact amount of C) the catalyst depends on various factors such as whether the catalyst is homogeneous or heterogenous and whether the method is performed in a batch or continuous manner, however, the amount of catalyst may be > 0 to 10 weight %, alternatively > 0 to 5%, and alternatively > 0 to 0.1 weight %; based on combined weights of starting materials A), B), C), and D) used in the method. Alternatively, the amount of heterogeneous catalyst used in a batch process may be > 0 to 5%, alternatively, > 0 to 2%, alternatively 0.5% to 5%, alternatively 1% to 5%, and alternatively 1% to 2%, based on combined weights of starting materials A), B), C), and D) used in step 1) of the method. Alternatively, when the method will be performed batchwise with a homogeneous catalyst, the amount of catalyst may be > 0 to 1%. Alternatively, when the method will be run continuously, the amounts of catalyst may differ. For example, a heterogeneous catalyst may be used in a packed bed for a continuous process, where the amount of catalyst will depend on the size of the reactor.

The starting materials used in the method may be free of water. Without wishing to be bound by theory, it is thought that water may inhibit C) the base catalyst. "Free of water" means that the starting materials contain no water, alternatively a non-detectable amount of water, and alternatively an amount of water insufficient to inhibit C) the base catalyst. The starting materials used in the method may optionally further comprise one or more additional starting materials. For example, the additional starting materials may be selected from the group consisting of D) an endblocker, E) a quenching agent, or both.

The endblocker differs from starting materials A) and B) and may comprise unit formula (R₃SiO_{1/2})ₑ(R₂R'SiO_{1/2})_{f}(R₂SiO_{2/2})_{g}(RR'SiO_{2/2})ₕ, where R and R' are as described above, subscript e is 0, 1, or 2; subscript f is 0, 1 or 2; a quantity (e + f) = 2; subscript g ≥ 0, subscript h ≥ 0; and 0 ≤ (g + h) ≤ 3. Alternatively, the quantity (g + h) may be 0 to 2, and alternatively 0 to 1. Endblockers are known in the art and are commercially available. Examples of endblockers may include 1,3-divinyl-1,1,3,3-tetramethyldisiloxane; 1,1,1,3,3-pentamethyl-3-vinyl-disiloxane; 1,1,1,3,5,5,5-heptamethyl-3-vinyl-trisiloxane, all of which are commercially available, e.g., from Gelest, Inc. of Morrisville, Pennsylvania, USA or Sigma-Aldrich of St. Louis, Missouri, USA.

The endblocker is optional. However, the endblocker may be used, for example, when cyclic starting materials A1) and B1) are used in the method. The endblocker may be used in an amount of 0 to 44.5%, alternatively 0 to 40%, alternatively 0 to 30%, alternatively 0 to 25%, based on combined weights of starting materials A), B), C), and D). The balance of the starting materials used in the method may be starting materials A) and B). Alternatively, starting materials A) and B) may comprise 45.5 weight % to < 100 weight %, alternatively 50% to < 100 %, alternatively 60% to < 100%, and alternatively 75% to < 100%, based on combined weights of starting materials A), B), C), and D) used in the method.

Steps 1) and 2) of the method may be performed by any convenient means using conventional equipment. For example, the starting materials may be combined in a jacketed vessel equipped with an agitator. The starting materials may be added to the vessel in any order. Steps 1) and 2) may be performed sequentially or concurrently. Step 2) may be performed by mixing with the agitator while controlling temperature in the vessel at a temperature of 100 °C to 160 °C, alternatively 140 °C to 150 °C, as the equilibration reaction occurs.

The equilibration reaction described herein is illustrated by the following exemplary reaction scheme: 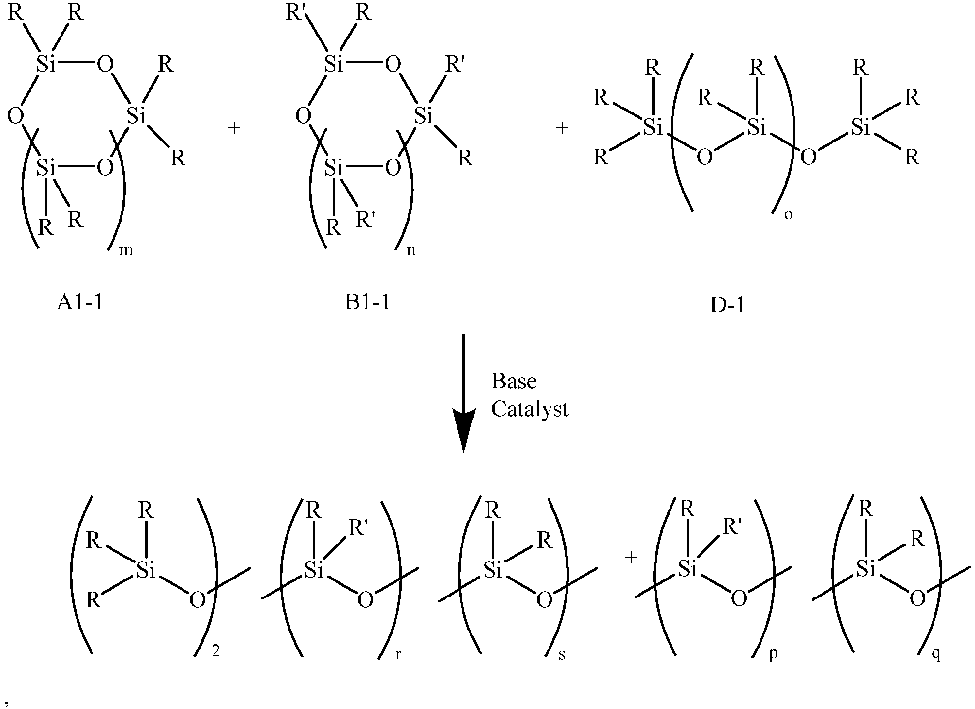 where R and R' are as described above, subscript m is 1 to 10, subscript n is 1 to 10, subscript o is 0 to 3, and a quantity (p + q) ≥ 3, largely 3 to 9, and a quantity (r + s) = 10 to 1,000. Alternatively, subscript s may be 10 to 500, alternatively 30 to 250, and subscript r may be 3 to 70. Alternatively, each R may be methyl, subscript m may have an average value of 2, subscript n may have an average value of 2, and subscript o may be 0. In the reaction scheme above, the reaction includes equilibration of ≡Si-O-Si≡ bonds from one molecule to another, including ring opening of the cyclic siloxanes and endblocking by the endblocker shown above. It may be desirable to produce a fully equilibrated product.

Using the reaction scheme above, in step 2), a polyorganosiloxane copolymer product and a mixed cyclic by-product form. The copolymer comprises D units of formula (R₂SiO_{2/2}) and D^{Vi} units of formula (RR'SiO_{2/2}). Without wishing to be bound by theory, it is thought that during step 2), the copolymer when first formed has a blocky distribution of the difunctional units, i.e., blocks of D^{Vi} units and blocks of D units. Over time as the equilibrium reaction progresses, the position of the D and D^{Vi} units will change to a more randomized sequence in the backbone of the copolymer. Raman spectroscopy can be used to determine characteristic Raman bands (peaks on spectra) corresponding to coupled D^{Vi} units and decoupled D^{Vi} units. Coupled refers to a D^{Vi} unit adjacent to another D^{Vi} unit in a copolymer backbone. Decoupled refers to a D^{Vi} unit not adjacent to another D^{Vi} unit in a copolymer backbone.

The inventors found that Raman spectroscopy can be used to monitor the reaction mixture in real time in step 3) of the method described above. Furthermore, Raman spectroscopy can be used to monitor the reaction mixture in situ. The inventors surprisingly found that Raman spectroscopy can detect changes in the sequence (e.g., blocky or random sequence) of D and D^{Vi} units in a polyorganosiloxane copolymer backbone. Furthermore, Raman spectroscopy as described herein can be used for copolymers with a D:D^{Vi} ratio of at least 1:1, alternatively at least 1.5:1 and alternatively at least 2:1. At the same time, the D:D^{Vi} ratio of the copolymer may be up to 30:1, alternatively up to 15:1, alternatively up to 10:1, alternatively up to 5:1, and alternatively up to 3:1. Alternatively, the Raman spectroscopy described herein can be used for copolymers with a D:D^{Vi} ratio of 1:1 to 30:1, alternatively 1:1.5 to 1:2.5, and alternatively 1:2 to 1:3. Alternatively, the Raman spectroscopy described herein can be used for copolymers with a D:D^{Vi} ratio of 100:1 to 1:100, alternatively 75:1 to 1:75; alternatively 50:1 to 1:50; alternatively 30:1 to 1:30; alternatively 5:1 to 1:5, alternatively 3:1 to 1:3, alternatively 2.5:1 to 1:2.5; alternatively 2:1 to 1:2, and alternatively 1.5:1 to 1:1.5.

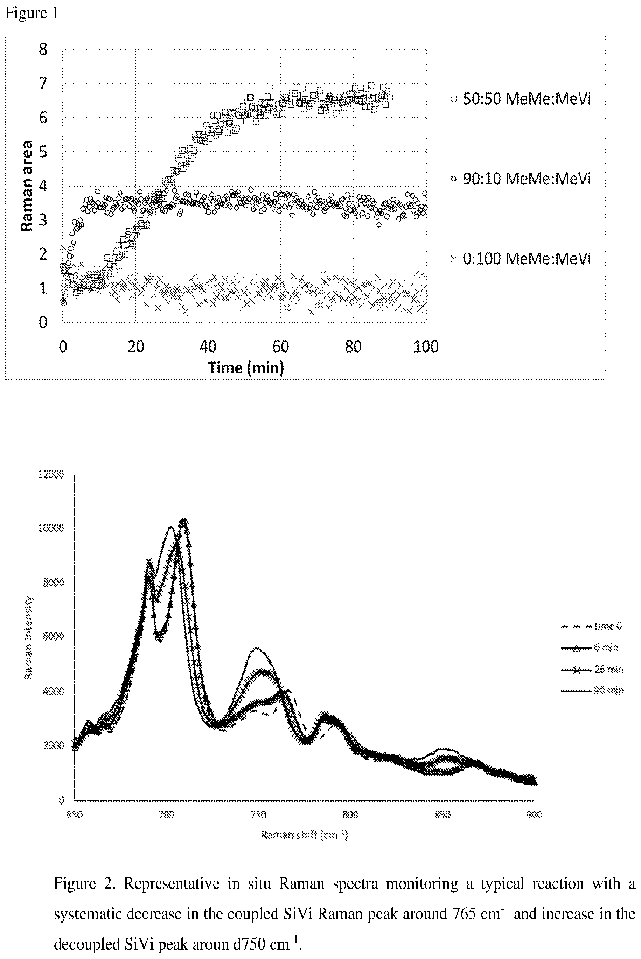

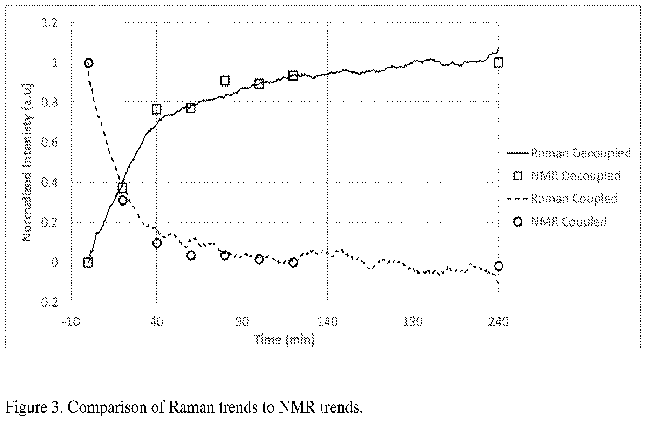

The intensities of the characteristic Raman bands (e.g., peak height and/or peak area on a spectrum measured by Raman spectroscopy) may be measured after time intervals, as the equilibration reaction progresses. The peak area and peak height of the decoupled Si-R' Raman band increases with increasing reaction time while the peak area and peak height of the coupled Si-R' Raman band decreases with increasing reaction time. U.S. Patent Application 2004/0198927 discloses equipment for measuring intensities of characteristic Raman bands (to obtain peak heights and peak areas) using Raman spectroscopy. These Raman features can be used to set targets for when to stop the reaction to optimize properties of the polyorganosiloxane copolymer and/or to optimize reaction batch time. Targets can be set based on the decoupled SiR' peak area, decoupled Si-R' peak height, coupled Si-R' peak area, and/or coupled Si-R' peak height. The reaction can be controlled by stopping the reaction when the value for any one or more of these features reaches the target. One skilled in the art could set the targets for each of these parameters to optimize application performance while minimizing batch time. Targets could also be set based on the rate of change of any of these parameters. For example, as the reaction proceeds the decoupled Si-R' peak area increases until it reaches a maximum value and then levels out as shown in, e.g., Figure 1 and Figure 3 below.

A rate of change in the intensity of each Characteristic Raman band may be calculated over each time interval. When the rate of change approaches zero, this indicates that the copolymer is fully equilibrated (with a random distribution of D and D^{Vi} units). Therefore, when a random copolymer is desired, the target may be set, for example, at a value of 0% to 10% of the maximum absolute value rate of change over a selected time interval, such as a 15-minute-average value measurable during the course of the equilibration reaction for stopping the reaction in step 4). Alternatively, the target could also be set to stop the reaction when the rate of change reaches a predetermined value for any of the features of decoupled Si-R' peak area, decoupled Si-R' peak height, coupled Si-R' peak area, or coupled Si-R' peak height, as described and exemplified below in the EXAMPLES herein. Alternatively, the target could also be set to stop the reaction when the decoupled Si-R' peak height or decoupled Si-R' peak area reaches its maximum, or 90% to 100% of its maximum. Alternatively, the target could be set to stop the reaction when the coupled Si-R' peak height or coupled Si-R' peak area reaches its minimum, or 0% to 10% of its minimum. One or more of the features described herein can be used to set the target and/or determine when the target has been reached. Alternatively, a mathematical transformation to peak height, peak area, or rate of change data may be used to smooth the resulting data, including but not limited to averaging across multiple instrument readings or fitting data to a mathematical equation (such as exponential decay or logistic functions). Chemometric analysis such as classical least squares (CLS), partial least squares (PLS), principal component regression (PCR) can also be used in lieu of the univariate analysis mentioned above for setting the target.

Stopping the reaction in step 4) may be performed by any convenient means, such as cooling and/or filtering to remove the catalyst (when a heterogeneous catalyst is used) or neutralizing with E) a quenching agent (when a homogeneous catalyst is used) to form a salt, which can then be removed by filtering in a batch or continuous mode. Quenching agents are known in the art and are exemplified by acetic acid, silyl phosphate, silyl phosphonate and carbon dioxide.

The method described herein may optionally further comprise one or more additional steps. For example, the method may further comprise step 5): recovering the polyorganosiloxane copolymer. During the equilibrium reaction, a by-product (such as the mixed cyclic described above in the exemplary reaction scheme) may form and/or unreacted starting materials A) and/or B) may be present in the reaction mixture. Recovering may be performed, for example, by any convenient means such as stripping and/or distilling to remove unreacted starting materials and/or by-products from the polyorganosiloxane copolymer.

The method may optionally further comprise step 6): repeating steps comprising 1) to 4) (and optionally 5) while reusing the catalyst (when a heterogeneous catalyst is used) in step 1).

The method described herein can produce a polyorganosiloxane copolymer comprising unit formula:

(R₃SiO_{1/2})ₜₜ(R₂R'SiO_{1/2})ᵤᵤ(R₂SiO_{2/2})ᵥᵥ(RR'SiO_{2/2})_{ww}(RSiO_{3/2})ₓₓ(R'SiO_{3/2})_{yy}(SiO_{4/2})_{zz},

where subscripts tt, uu, vv, ww, xx, yy, and zz represent average numbers of each unit in the copolymer, subscript tt ≥ 0, uu ≥ 0, vv ≥ 1, ww ≥ 1, xx ≥ 0, yy ≥ 0, zz ≥ 0, with the provisos that a quantity (vv + ww) ≥ 3, a quantity (xx + yy + zz) is 0 to a value sufficient to provide up to 20 mol % of siloxane units in the copolymer molecule; a quantity (tt + uu + vv + ww) ≥ 3. Alternatively, the quantity (tt + uu + vv + ww) may be greater than or equal to 5. Alternatively, (tt + uu + vv + ww) may have a value of 5 to 2,000; alternatively 5 to 1,000; alternatively 10 to 500; alternatively 25 to 300; and alternatively 50 to 200. This copolymer differs from starting materials (A) and (B) in at least one property such as molecular weight, distribution of the (R₂SiO_{2/2}) and (RR'SiO_{2/2}) units, and molar ratio of units of formula (R₂SiO_{2/2}) to units of formula (RR'SiO_{2/2}) (D:D^{Vi} ratio). The copolymer also contains both D and D^{Vi} units. The D:D^{Vi} ratio may be 100:1 to 1:100, alternatively 75:1 to 1:75; alternatively 50:1 to 1:50; alternatively 30:1 to 1:30; alternatively 5:1 to 1:5, alternatively 3:1 to 1:3, alternatively 2.5:1 to 1:2.5; alternatively 2:1 to 1:2, and alternatively 1.5:1 to 1:1.5; alternatively 1:1 to 30:1, alternatively 1:1.5 to 1:2.5, and alternatively 1:2 to 1:3. Alternatively, the copolymer produced by the method described herein may be linear, and when subscripts xx = 0, yy = 0, and zz = 0, the copolymer may have unit formula: (R₃SiO_{1/2})ₜₜ(R₂R'SiO_{1/2})ᵤᵤ(R₂SiO_{2/2})ᵥᵥ(RR'SiO_{2/2})_{ww}, subscript tt is 0, 1, or 2; subscript uu is 0, 1, or 2; a quantity (tt + uu) = 2; subscript vv > 1, subscript ww > 1, and where subscripts vv and ww have values such that D:D^{Vi} ratio is as described above.

### EXAMPLES

The following examples are intended to illustrate the invention to one skilled in the art and should not be interpreted to limit the scope of the invention set forth in the claims. The reactants and other starting materials used in the examples are shown below in Table 1. As used in the following Examples, "Calculated" refers to D:D^{Vi} and DP of the copolymer calculated based on amounts of each starting material used.

**Table 1 - Starting Materials**

| Reactant | Chemical Description | Source |
|---|---|---|
| D₄ | 2,2,4,4,6,6,8,8-octamethylcyclotetrasiloxane | DSC |
| V₄ | 2,4,6,8-tetramethyl-2,4,6,8-tetravinyl-cyclotetrasiloxane | DSC |
| Hexamethyldisiloxane | 1,1,1,3,3,3-hexamethyldisiloxane | DSC |
| Endblocker M^{Vi}D_{7.2}M^{Vi} | α,ω-dimethylvinylsiloxy-terminated polydimethylsiloxane with average DP of 7.2 | DSC |
| MeVi homopolymer | α,ω-trimethylsiloxy-terminated polyvinylmethylsiloxane homopolymer with viscosity 7 to 15 cSt and average DP of 15.5 | VMS-T11 from Gelest |
| PDMS | α,ω-trimethylsiloxy-terminated polydimethylsiloxane with viscosity 5 cSt and average DP of 7.2 | DSC |
| Catalyst 1 TBPOH | Tetrabutylphosphonium hydroxide | Millipore Sigma |
| Catalyst 2 | Potassium silanolate | DSC |
| Neutralizer | silyl phosphate | DSC |

In Table 1, DSC refers to Dow Silicones Corporation of Midland, Michigan, USA, and TDCC refers to The Dow Chemical Company of Midland, Michigan, USA.

### Reference Example A - Raman Spectroscopy Technique

Reaction progress was monitored by Raman spectroscopy using the following equipment and settings: BWTek i-Raman Pro; Probe Head: Immersion Optic: Kaiser Optical Systems, Inc. 0.5" O.D. x 10" L Hastelloy C-276 shaft and gold scaled sapphire lens and 785 nm excitation. Raman cut-off at 150 cm⁻¹. Laser fiber 105 um core FC/PC terminated. Raman fiber 300 um core FC/PC terminated. Fiber cable length 1.5 m. Spectra were collected with a 10 second exposure time with 2 averages. Spectra were then processed to determine the peak area trend lines of the coupled and decoupled -OSiMeVi- moiety.

### Reference Example B - Equipment for Copolymerization

A poly(dimethyl/methyvinyl)siloxane copolymer was prepared using a 500 mL two-part batch reactor. The top (flange) part of the reactor had 3x 29/42 ports in a straight line, 2x 1/4" Ace thread ports and a 3/8" Ace thread port on one side and a 24/40 port on the other side. The middle 29/42 port had a stir shaft connected to an overhead stirrer with a 3-blade glass impeller. One 29/42 port had a Dean Stark trap connected to a condenser, which was connected to a chiller running Syltherm XLT at 10 °C. The condenser was connected to a nitrogen inlet that, via a T, which could sweep the reaction headspace or place it under a pad of nitrogen. The nitrogen line vented through a mineral oil bubbler. The other 29/42 contained a sampling port with a Teflon tube extending into the reactor. The 3/8" Ace thread used to insert a Raman probe for in situ analysis and for the 1/4" ports, one contained a glass thermowell and a thermocouple and the other a nitrogen inlet. The 24/40 neck contained the Raman probe attached through a rubber septum. The bottom reactor potion is sealed with a teflon-coated O-ring rubbed with Krytox^{™}. It was clamped in place using a compression clamp and secured with an insulated C-clamp. A heating mantle with a thermocouple in it was placed over the bottom portion of the reactor and secured in place with a ring clamp and a lab jack.

### Reference Example C - Copolymerization Procedure

Copolymerization of cyclic reactants was performed according to the following reaction scheme: 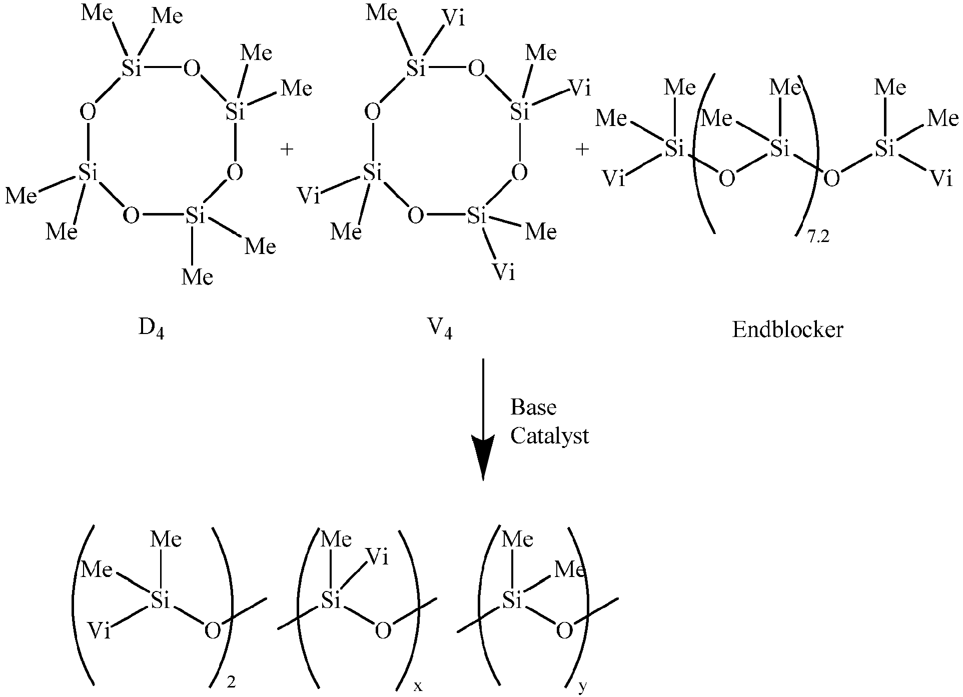 A 500 mL glass reactor equipped with overhead stirrer with glass impeller, thermocouple, 1/8" teflon sampling tube with 3-way valve, a Dean-Stark trap with water-cooled reflux condenser, a nitrogen sweep, and a Raman spectrometer probe was used. The flask was charged with D₄, V₄ , and Endblocker M^{Vi}D_{7.2}M^{Vi}, and the nitrogen sweep was discontinued. Raman spectroscopy was started, and spectra were taken every 20 seconds. The reaction mixture was stirred at 250 rpm and heated to 160 °C using a heating mantle with a temperature controller. To the reaction mixture was added a catalyst in the amount shown in Table 2, below, which was chased with ~2 mL D₄. The reaction was stopped after three hours and quenched with 5.9 g of neutralizer (2.5 wt% in D₄).

**Table 2 - Copolymerization of Cyclic Reactants**

| Sample | D4 (mL) | V4 (mL) | Endblocker | Catalyst amount (mL) | Catalyst selected | Target DP (x + y) | Me2:MeVi |
|---|---|---|---|---|---|---|---|
| 1 | 106 | 132 | 16 | 3 | 1 (TBPOH) | Not determined | Not determined |
| W2 | 106 | 132 | 16 | 3 | 1 (TBPOH) | 126 | 50:50 |
| W3 | 106 | 132 | 16 | 3 | 1 (TBPOH) | 126 | 50:50 |
| W4 | 214 | 28 | 18 | 3 | 1 (TBPOH) | 126 | 90:10 |
| W5 | 106 | 132 | 16 | 0.3 | 1 (TBPOH) | 140 | 50:50 |
| C1 | 0 | 177 | 23 | 1 | 2 | 71 | 0:100 |
| W6 | 74 | 306 | 22 | 6 | 2 | 141 | 25:75 |
| W7 | 433 | 7 | 28 | 5.6 | 2 | 143 | 98.6:1.4 |

In Table 2, W denotes a working example, and C denotes a comparative example. Figure 1 shows the integrated peak area as a function of time for the decoupled -OSiMeVi-moiety for three different samples with varying -OSiMeVi- content in terms of weight percent. Sample C1 was the homopolymerization of V₄ (shown in gray x's in Figure 1), which did not show any randomization since all pendant groups were identical. This is evident by the peak area at 750 cm⁻¹ remaining constant throughout the trial. Two other trials were performed with 90:10 D₄:V₄ (Sample W4, circles) and 50:50 D₄:V₄ (Samples W1 to W3, squares). Increasing V₄ content allowed for more randomization along the backbone, hence the larger normalized Raman intensity at the end of the runs. The rates at which randomization reached equilibrium varied significantly for both the 90:10 D₄:V₄ and 50:50 D₄:V₄ samples.

### Reference Example D - Copolymerization with Linear Reactants

Copolymerization with linear reactants was performed according to the following reaction scheme:

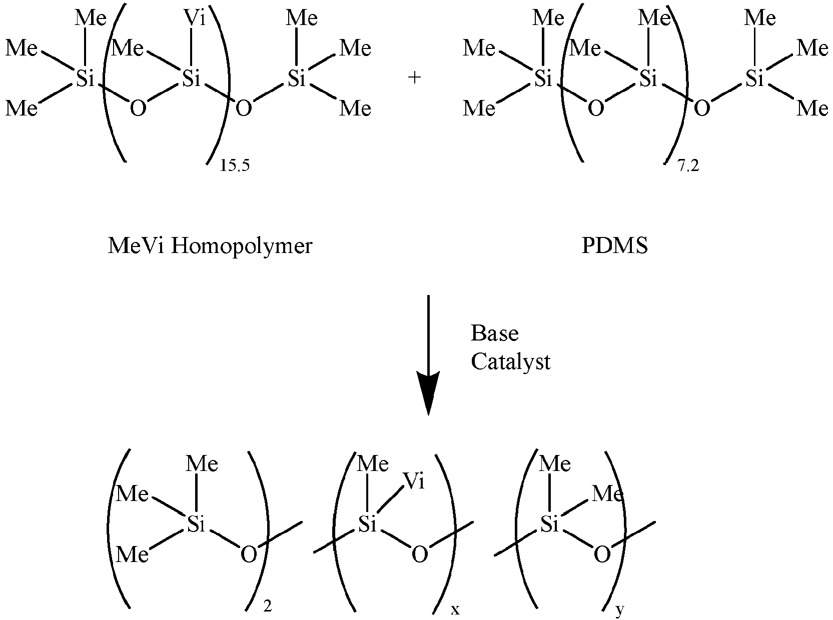

A 500 mL glass reactor equipped with overhead stirrer with glass impeller, thermocouple, 1/8" teflon sampling tube with 3-way valve, a Dean-Stark trap with water-cooled reflux condenser, a nitrogen sweep, and a Raman spectrometer probe was used. The flask was charged with 29.4 g (21.3 mmol) MeVi homopolymer (which was stripped of cyclics prior to use) and 168.8 g PDMS (243 mmol) and the nitrogen sweep discontinued. Raman spectroscopy was started, and spectra were taken every 20 seconds. The reaction mixture was stirred at 250 rpm and heated to 160 °C using a heating mantle with a temperature controller. To the reaction mixture was added 1.8 g (36 ppm K+) of catalyst 2 (12 wt%), which was chased with ~2 mL toluene. The reaction was stopped after 4 hours and quenched with 2.16 g of 4-6085 neutralizer (2.5 wt% in D₄). The data in Table 3 below show that this method can be performed with linear reactants.

**Table 3 - Copolymerization with Linear Reactants**

| Sample | PDMS (g) | MeVi homopolymer (g) | Catalyst (g) | Catalyst selected |
|---|---|---|---|---|
| W8 | 144 | 50 | 0.04 | 2 |
| W9 | 168 | 29 | 1.8 | 2 |

Without wishing to be bound by theory, it is thought that a benefit of the present invention is that the method can be used to select a desired degree of randomization for the D and D^{Vi} units in the backbone of a polyorganosiloxane copolymer produced by the method while minimizing batch time. For example, a high peak area target, e.g., ≤ 10% of the maximum 15 minute average absolute value rate of change, can be selected to obtain a highly randomized copolymer. Alternatively, the target can be set with a lower Decoupled SiR' Peak area (or other suitable target), to minimize batch time to produce the copolymer, e.g., when having a copolymer with a more blocky structure is acceptable.

### Industrial Applicability

Polyorganosiloxane copolymers are intermediates useful for synthesis of various organofunctional siloxane products. In particular, such copolymers having D units of formula (R₂SiO_{2/2}) and D^{Vi} units of formula (RR'SiO_{2/2}) are useful, for example, as crosslinkable base polymers in various cure systems, such as free radical and/or hydrosilylation reaction curable products.

Without wishing to be bound by theory, it is thought that distribution of the alkenyl functionalities along the polysiloxane backbone can impact both physical and chemical properties of the resulting polyorganosiloxane copolymer. For instance, blocky structures can have different reactivity than random structures. The degree of randomness can affect physical properties, such as elongation, tensile, or hardness in downstream applications. During equilibration and polymerization reactions, it is desirable to reach a consistent sequence distribution along the polysiloxane backbone to facilitate consistent performance.

The polyorganosiloxanes produced by the method described herein can have blocky backbone structures (*e.g*., DDDDD^{Vi}D^{Vi}D^{Vi}D^{Vi}DDD) where multiple D units are grouped together and multiple D^{Vi} units are grouped together in 'blocks'. However, without wishing to be bound by theory, the inventors found that more random backbone structures (e.g., DDDDD^{Vi}DDDD^{Vi}DD^{Vi}DDD^{Vi}DDDDDDDD^{Vi}) where the D and D^{Vi} units are more randomly distributed along the backbone may be desirable for certain applications, such as use of the copolymers in curable silicone compositions, such as hydrosilylation reaction curable silicone elastomer compositions. Furthermore, the polyorganosiloxane produced by the method described herein may reach its target molecular weight at a different time than (sometimes well before) the distribution of D and D^{Vi} units in the backbone are randomly distributed. This can result in varying degrees of "randomness" in the backbone structure of the siloxane from batch to batch and impact physical properties and performance. And, degree of randomness can impact performance of the copolymer. The method described herein may be used to both minimize batch time and maximize randomization of the polyorganosiloxane copolymer by appropriate selection of the target for stopping the reaction in the method described herein.

Furthermore, without wishing to be bound by theory, it is thought that the Raman spectroscopy method described herein may alternatively be used for the production of other polyorganosiloxane copolymers, such as those having moieties of formula (RR"SiO_{2/2}), where R" is an aryl group such as phenyl, in place of the moieties of formula (RR'SiO_{2/2}), where R and R' are as described above.

### Definitions and Usage of Terms

All amounts, ratios, and percentages are by weight unless otherwise indicated. The amounts of all starting materials in a composition total 100% by weight. The articles 'a', 'an', and 'the' each refer to one or more, unless otherwise indicated by the context of specification. The singular includes the plural unless otherwise indicated. The term "comprising" and derivatives thereof, such as "comprise" and "comprises" are used herein in their broadest sense to mean and encompass the notions of "including," "include," "consist(ing) essentially of," and "consist(ing) of. The use of "for example," *"e.g.,"* "such as," and "including" to list illustrative examples does not limit to only the listed examples. Thus, "for example" or "such as" means "for example, but not limited to" or "such as, but not limited to" and encompasses other similar or equivalent examples.

The terms "decoupled D^{Vi}" and "decoupled (RR'SiO_{2/2})" refer to the units of formula (RR'SiO_{2/2}) in the siloxane backbone of a copolymer which are not adjacent to other (RR'SiO_{2/2}) units. For example, in a moiety -(R₂SiO_{2/2})-(RR'SiO_{2/2})-(R₂SiO_{2/2})-, the (RR'SiO_{2/2}) unit is a decoupled (RR'SiO_{2/2}). The more decoupled (RR'SiO_{2/2}) in a copolymer backbone, the higher the degree of randomness of the copolymer, with the exception of a completely alternating copolymer backbone, which is not favored by the equilibrium reaction described herein.

The terms "coupled D^{Vi}" and "coupled (RR'SiO₂)" refer to the units of formula (RR'SiO_{2/2}) that are adjacent to other (RR'SiO_{2/2}) units. For example, in a moiety -(RR'SiO_{2/2})-(RR'SiO_{2/2})-(RR'SiO_{2/2})-, the (RR'SiO_{2/2}) units are coupled. The more coupled SiR' in a copolymer, the more blocky character it has.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "20 to 110" may be further delineated into a lower third, i.e., 20 to 49, a middle third, i.e., 50 to 79, and an upper third, i.e., 80 to 110, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. Furthermore, an individual number within a disclosed range may be relied upon and provides adequate support for specific embodiments within the scope of the appended claims.

Abbreviations used herein are defined in Table 4.

**Table 4 - Abbreviations**

| Abbreviation | Definition |
|---|---|
| °C | Degrees Celsius |
| cSt | centistokes |
| D | A difunctional siloxane unit of formula (R₂SiO_{2/2}) where R is an alkyl group such as methyl |
| D^{Vi} | A difunctional siloxane unit of formula (RR'SiO_{2/2}) where each R is an alkyl group such as methyl and R' is an alkenyl group such as vinyl |
| DP | Degree of polymerization |
| g | Grams |
| hr | hours |
| M | A monofunctional siloxane unit of formula (R₃SiO_{1/2}) where R is an alkyl group such as methyl |
| Me | methyl |
| min | minutes |
| M^{Vi} | A monofunctional siloxane unit of formula (R₂R'SiO_{1/2}) where each R is an alkyl group such as methyl and R' is an alkenyl group such as vinyl |
| um | micrometer |
| Vi | vinyl |

## Claims

1. A method for preparing a polyorganosiloxane copolymer, wherein the method comprises:
1) combining starting materials comprising
A) a source of siloxane units of formula (R₂SiO_{2/2}),
B) a source of siloxane units of formula (RR'SiO_{2/2}),
where each R is independently selected from the group consisting of an alkyl group and a halogenated alkyl group and R' represents an alkenyl group, and
C) a base catalyst,
thereby forming a mixture;
2) agitating the mixture at a temperature sufficient to form a reaction mixture comprising the copolymer via equilibration reaction;
3) using Raman spectroscopy to monitor a spectral region including a characteristic Raman band that corresponds to one or both of a concentration of decoupled (RR'SiO_{2/2}) and a concentration of coupled (RR'SiO_{2/2}) units in the reaction mixture;
4) stopping the equilibration reaction when a target related to the characteristic Raman band is reached.

2. The method of claim 1, where the target is selected from the group consisting of
i) a characteristic Raman band height or area,
ii) a rate of change of the characteristic Raman band height or area,
iii) a mathematical transformation to one or both of i) and ii), and
iv) a chemometric analysis of the spectral region including the characteristic Raman band.

3. The method of claim 2, where the target is the rate of change of the characteristic Raman band height or the rate of change of the characteristic Raman band area, and the rate of change has a value of 0% to 10% of its maximum absolute value measurable during the course of the equilibration reaction.

4. The method of claim 2 or claim 3, where the decoupled (RR'SiO_{2/2}) characteristic Raman band area is used.

5. The method of any one of claims 1 to 4, where starting materials A) and B) comprise unit formula (R₃SiO_{1/2})ₜ(R₂R'SiO_{1/2})ᵤ(R₂SiO_{2/2})ᵥ(RR'SiO_{2/2})_{w}(RSiO_{3/2})ₓ(R'SiO_{3/2})_{y}(SiO_{4/2})_{z}, where subscripts t, u, v, w, x, y, and z represent amounts of each unit, t ≥ 0, u ≥ 0, v ≥ 1, w ≥ 1, x ≥ 0, y ≥ 0, z ≥ 0, with the provisos that a quantity (v + w) is 3 to 300, a quantity (x + y + z) is 0 to a value sufficient to provide up to 20 mol % of units in the molecule; a quantity (t + u + v + w) ≥ 3.

6. The method of any one of claims 1 to 5, where starting material A) is selected from the group consisting of:
A1) a cyclic polydiorganosiloxane comprising unit formula (R₂SiO_{2/2})_{c}, where 3 ≤ c is ≤ 12;
A2) a linear polydiorganosiloxane comprising unit formula (R₃SiO_{1/2})ₐ(R₂R'SiO_{1/2})_{d}(R₂SiO_{2/2})_{b}, where 0 ≤ a ≤ 2, 0 ≤ d ≤ 2, a quantity (a + d) = 2, and 3 ≤ b ≤ 200; and
A3) a combination of both A1) and A2).

7. The method of any one of claims 1 to 6, where starting material B) is selected from the group consisting of:
B1) a cyclic alkenyl-functional polydiorganosiloxane of unit formula (RR'SiO_{2/2})_{c}, where 3 ≤ c ≤ 12;
B2) a linear alkenyl-functional polydiorganosiloxane of unit formula (R₃SiO_{1/2})ₐ(R₂R'SiO_{1/2})_{d}(RR'SiO_{2/2})ₑ, where 0 ≤ a ≤ 2, 0 ≤ d ≤ 2, a quantity (a + d) = 2, and 3 ≤ e ≤ 200; and
B3) a combination of both B1) and B2).

8. The method of any one of claims 1 to 5, where a polydiorganosiloxane comprises both of starting materials A) and B) in the same molecule.

9. The method of any one of the preceding claims, where the method is run batchwise.

10. The method of any one of the preceding claims, where the catalyst is a heterogeneous catalyst.

11. The method of any one of the preceding claims, where the starting materials in step 1) are free of water.

12. The method of any one of the preceding claims, where the starting materials in step 1) further comprise D) an endblocker.

13. The method of claim 12, where the endblocker comprises unit formula:
(R₃SiO_{1/2})ₑ(R₂R'SiO_{1/2})_{f}(R₂SiO_{2/2})_{g}(RR'SiO_{2/2})ₕ,
where 0 ≤ e ≤ 2, 0 ≤ f ≤ 2, a quantity (e + f) = 2; subscript g ≥ 0, subscript h ≥ 0; and 0 ≤ (g + h) ≤ 30.

14. The method of any one of the preceding claims, where the monitoring in step 3) is performed via analysis of the reaction mixture in real time and in situ.

15. The method of any one of the preceding claims, where each R' is selected from the group consisting of vinyl, allyl, and hexenyl.

## Patentansprüche

1. Verfahren zum Herstellen eines Polyorganosiloxancopolymers, wobei das Verfahren umfasst:
1) Kombinieren von Ausgangsmaterialien, umfassend
A) eine Quelle von Siloxaneinheiten der Formel (R₂SiO_{2/2}),
B) eine Quelle von Siloxaneinheiten der Formel (RR'SiO_{2/2}),
wobei jedes R unabhängig aus der Gruppe ausgewählt ist, bestehend aus einer Alkylgruppe und einer halogenierten Alkylgruppe, und R' eine Alkenylgruppe darstellt, und
C) einen Basiskatalysator,
wodurch ein Gemisch ausgebildet wird;
2) Rühren des Gemisches bei einer Temperatur, die ausreicht, um ein Reaktionsgemisch auszubilden, umfassend das Copolymer über eine Gleichgewichtsreaktion;
3) Verwenden von Raman-Spektroskopie, um einen Spektralbereich zu überwachen, der eine charakteristische Raman-Bande einschließt, die einer oder beiden von einer Konzentration von entkoppelten (RR'SiO_{2/2}) und/oder einer Konzentration von gekoppelten (RR'SiO_{2/2})-Einheiten in dem Reaktionsgemisch entspricht;
4) Stoppen der Gleichgewichtsreaktion, wenn ein Ziel bezüglich der charakteristischen Raman-Bande erreicht wird.

2. Verfahren nach Anspruch 1, wobei das Ziel aus der Gruppe ausgewählt ist, bestehend aus
i) einer charakteristischen Raman-Bandenhöhe oder -fläche,
ii) einer Änderungsgeschwindigkeit der charakteristischen Raman-Bandenhöhe oder -fläche,
iii) einer mathematischen Transformation von einem oder beiden von i) und ii), und
iv) einer chemometrischen Analyse des Spektralbereichs einschließlich der charakteristischen Raman-Bande.

3. Verfahren nach Anspruch 2, wobei das Ziel die Änderungsgeschwindigkeit der charakteristischen Raman-Bandenhöhe oder die Änderungsgeschwindigkeit der charakteristischen Raman-Bandenfläche ist, und die Änderungsgeschwindigkeit einen Wert von 0 % bis 10 % ihres maximalen absoluten Werts aufweist, der während des Verlaufs der Gleichgewichtsreaktion messbar ist.

4. Verfahren nach Anspruch 2 oder 3, wobei die entkoppelte (RR'SiO_{2/2}) charakteristische Raman-Bandenfläche verwendet wird.

5. Verfahren nach einem der Ansprüche 1 bis 4, wobei die Ausgangsmaterialien A) und B) die Einheitsformel (R₃SiO_{1/2})ₜ(R₂R'SiO_{1/2})ᵤ(R₂SiO_{2/2})ᵥ(RR'SiO_{2/2})_{w}(RSiO_{3/2})ₓ(R'SiO_{3/2})_{y}(SiO_{4/2})_{z} umfassen, wobei die Indizes t, u, v, w, x, y und z Mengen jeder Einheit darstellen, t ≥ 0, u ≥ 0, v ≥ 1, w ≥ 1, x ≥ 0, y ≥ 0, z ≥ 0, mit der Maßgabe, dass eine Anzahl (v + w) 3 bis 300 beträgt, eine Anzahl (x + y + z) 0 bis zu einem Wert beträgt, der ausreicht, um bis zu 20 Mol-% der Einheiten in dem Molekül bereitzustellen; eine Anzahl (t + u + v+ w) ≥ 3.

6. Verfahren nach einem der Ansprüche 1 bis 5, wobei das Ausgangsmaterial A) aus der Gruppe ausgewählt ist, bestehend aus:
A1) einem zyklischen Polydiorganosiloxan, umfassend die Einheitsformel (R₂SiO_{2/2})_{c}, wobei 3 ≤ c ≤ 12 ist;
A2) einem linearen Polydiorganosiloxan, umfassend die Einheitsformel (R₃SiO_{1/2})ₐ(R₂R'SiO_{1/2})_{d}(R₂SiO_{2/2})_{b}, wobei 0 ≤ a ≤ 2, 0 ≤ d ≤ 2, eine Anzahl (a + d) = 2, und 3 ≤ b ≤ 200; und
A3) einer Kombination von sowohl A1) als auch A2).

7. Verfahren nach einem der Ansprüche 1 bis 6, wobei das Ausgangsmaterial B) aus der Gruppe ausgewählt ist, bestehend aus:
B1) einem zyklischen alkenylfunktionellen Polydiorganosiloxan der Einheitsformel (RR'SiO_{2/2})_{c}, wobei 3 ≤ c ≤ 12;
B2) einem linearen alkenylfunktionellen Polydiorganosiloxan der Einheitsformel (R₃SiO_{1/2})ₐ(R₂R'SiO_{1/2})_{d}(RR'SiO_{2/2})ₑ, wobei 0 ≤ a ≤ 2, 0 ≤ d ≤ 2, eine Anzahl (a + d) = 2, und 3 ≤ e ≤ 200; und
B3) einer Kombination von sowohl B1) als auch B2).

8. Verfahren nach einem der Ansprüche 1 bis 5, wobei ein Polydiorganosiloxan beide der Ausgangsmaterialien A) und B) in demselben Molekül umfasst.

9. Verfahren nach einem der vorstehenden Ansprüche, wobei das Verfahren chargenweise ausgeführt wird.

10. Verfahren nach einem der vorstehenden Ansprüche, wobei der Katalysator ein heterogener Katalysator ist.

11. Verfahren nach einem der vorstehenden Ansprüche, wobei die Ausgangsmaterialien in Schritt 1) wasserfrei sind.

12. Verfahren nach einem der vorstehenden Ansprüche, wobei die Ausgangsmaterialien in Schritt 1) ferner D) einen Endblocker umfassen.

13. Verfahren nach Anspruch 12, wobei der Endblocker die Einheitsformel umfasst:
(R₃SiO_{1/2})ₑ(R₂R'SiO_{1/2})_{f}(R₂SiO_{2/2})_{g}(RR'SiO_{2/2})ₕ,
wobei 0 ≤ e ≤ 2, 0 ≤ f ≤ 2, eine Anzahl (e + f) = 2; Index g ≥ 0, Index h ≥ 0; und 0 ≤ (g + h) ≤ 30.

14. Verfahren nach einem der vorstehenden Ansprüche, wobei das Überwachen in Schritt 3) durch Analyse des Reaktionsgemisches in Echtzeit und in situ durchgeführt wird.

15. Verfahren nach einem der vorstehenden Ansprüche, wobei jedes R' aus der Gruppe ausgewählt ist, bestehend aus Vinyl, Allyl und Hexenyl.

## Revendications

1. Procédé permettant de préparer un copolymère polyorganosiloxane, dans lequel le procédé comprend :
1) la combinaison de matériaux de départ comprenant
A) une source de motifs siloxane de formule (R₂SiO_{2/2}),
B) une source de motifs siloxane de formule (RR'SiO_{2/2}),
où chaque R est indépendamment choisi dans le groupe constitué d'un groupe alkyle et d'un groupe alkyle halogéné et R' représente un groupe alcényle, et
C) un catalyseur basique,
en formant de ce fait un mélange ;
2) l'agitation du mélange à une température suffisante pour former un mélange réactionnel comprenant le copolymère par l'intermédiaire d'une réaction d'équilibrage ;
3) l'utilisation d'une spectroscopie Raman pour surveiller une région spectrale comportant une bande Raman caractéristique qui correspond à l'une et/ou l'autre d'une concentration en motifs (RR'SiO_{2/2}) découplés et d'une concentration en motifs (RR'SiO_{2/2}) couplés dans le mélange réactionnel ;
4) l'arrêt de la réaction d'équilibrage lorsqu'une cible se rapportant à la bande Raman caractéristique est atteinte.

2. Procédé selon la revendication 1, où la cible est choisie dans le groupe constitué de
i) une hauteur ou aire de bande Raman caractéristique,
ii) un taux de changement de la hauteur ou aire de bande Raman caractéristique,
iii) une transformation mathématique à l'un et/ou l'autre de i) et de ii), et
iv) une analyse chimiométrique de la région spectrale comportant la bande Raman caractéristique.

3. Procédé selon la revendication 2, où la cible est le taux de changement de la hauteur de bande Raman caractéristique ou le taux de changement de l'aire de bande Raman caractéristique, et le taux de changement a une valeur de 0 % à 10 % de sa valeur absolue maximale mesurable pendant le déroulement de la réaction d'équilibrage.

4. Procédé selon la revendication 2 ou la revendication 3, où l'aire de bande Raman caractéristique de (RR'SiO_{2/2}) découplé est utilisée.

5. Procédé selon l'une quelconque des revendications 1 à 4, où les matériaux de départ A) et B) comprennent la formule unitaire (R₃SiO_{1/2})ₜ(R₂R'SiO_{1/2})ᵤ(R₂SiO_{2/2})ᵥ(RR'SiO_{2/2})_{w}(RSiO_{3/2})ₓ(R'SiO_{3/2})_{y}(SiO_{4/2})_{z}, où les indices t, u, v, w, x, y et z représentent des quantités de chaque motif, t ≥ 0, u ≥ 0, v ≥ 1, w ≥ 1, x ≥ 0, y ≥ 0, z ≥ 0, aux conditions qu'une quantité (v + w) aille de 3 à 300, qu'une quantité (x + y + z) aille de 0 à une valeur suffisante pour fournir jusqu'à 20 % molaire de motifs dans la molécule ; une quantité (t + u + v + w) ≥ 3.

6. Procédé selon l'une quelconque des revendications 1 à 5, où le matériau de départ A) est choisi dans le groupe constitué de :
A1) un polydiorganosiloxane cyclique comprenant la formule unitaire (R₂SiO_{2/2})_{c}, où 3 ≤ c est ≤ 12 ;
A2) un polydiorganosiloxane linéaire comprenant la formule unitaire (R₃SiO_{1/2})ₐ(R₂R'SiO_{1/2})_{d}(R₂SiO_{2/2})_{b}, où 0 ≤ a ≤ 2, 0 ≤ d ≤ 2, une quantité (a + d) = 2, et 3 ≤ b ≤ 200 ;et
A3) une combinaison de l'un et l'autre de A1) et de A2).

7. Procédé selon l'une quelconque des revendications 1 à 6, où le matériau de départ B) est choisi dans le groupe constitué de :
B1) un polydiorganosiloxane à fonctionnalité alcényle cyclique de formule unitaire (RR'SiO_{2/2})_{c}, où 3 ≤ c ≤ 12 ;
B2) un polydiorganosiloxane à fonctionnalité alcényle linéaire de formule unitaire (R₃SiO_{1/2})ₐ(R₂R'SiO_{1/2})_{d}(RR'SiO_{2/2})ₑ, où 0 ≤ a ≤ 2, 0 ≤ d ≤ 2, une quantité (a + d) = 2, et 3 ≤ e ≤ 200 ;et
B3) une combinaison de l'un et l'autre de B1) et de B2).

8. Procédé selon l'une quelconque des revendications 1 à 5, où un polydiorganosiloxane comprend l'un et l'autre des matériaux de départ A) et B) dans la même molécule.

9. Procédé selon l'une quelconque des revendications précédentes, où le procédé est exécuté par lots.

10. Procédé selon l'une quelconque des revendications précédentes, où le catalyseur est un catalyseur hétérogène.

11. Procédé selon l'une quelconque des revendications précédentes, où les matériaux de départ à l'étape 1) sont dépourvus d'eau.

12. Procédé selon l'une quelconque des revendications précédentes, où les matériaux de départ à l'étape 1) comprennent en outre D) un bloqueur terminal.

13. Procédé selon la revendication 12, où le bloqueur terminal comprend la formule unitaire :
(R₃SiO_{1/2})ₑ(R₂R'SiO_{1/2})_{f}(R₂SiO_{2/2})_{g}(RR'SiO_{2/2})ₕ,
où 0 ≤ e ≤ 2, 0 ≤ f ≤ 2, une quantité (e + f) = 2 ; l'indice g ≥ 0, l'indice h ≥ 0 ; et 0 ≤ (g + h) ≤ 30.

14. Procédé selon l'une quelconque des revendications précédentes, où la surveillance à l'étape 3) est mise en œuvre par l'intermédiaire d'une analyse du mélange réactionnel en temps réel et in situ.

15. Procédé selon l'une quelconque des revendications précédentes, où chaque R' est choisi dans le groupe constitué de vinyle, allyle et hexényle.
